# EUROPÄISCHE PATENTSCHRIFT

(11) **EP 3 320 225 B1**
(45) Veröffentlichungstag und Bekanntmachung des Hinweises auf die Patenterteilung: **06.09.2023**
(21) Anmeldenummer: 16717947.2
(22) Anmeldetag: 22.04.2016
(51) Int. Cl.: F16G 3/00, F16G 3/02, B65G 15/30, F16G 11/04

(54) **GURT ODER GURTSEGMENT**
BELT OR BELT SEGMENT
COURROIE OU SEGMENT DE COURROIE

(30) Priorität: 08.07.2015 DE 102015212748
(43) Veröffentlichungstag der Anmeldung: 16.05.2018
(73) Patentinhaber: ContiTech Transportbandsysteme GmbH, 30165 Hannover (DE)
(72) Erfinder: HÜLS, Achim, 30890 Barsinghausen (DE); MÖSCHEN-SIEKMANN, Michael, 37176 Nörten-Hardenberg (DE); BEHRENS, Carsten, 37434 Bilshausen (DE)
(74) Vertreter: Continental Corporation
(86) Internationale Anmeldenummer: PCT/EP2016/059024
(87) Internationale Veröffentlichungsnummer: WO 2017/005384

(56) Entgegenhaltungen:
- US-A- 224 951
- US-A- 3 105 390
- US-A1- 2012 205 223
- US-A1- 2015 075 951

## Beschreibung

Die Erfindung betrifft einen Gurt oder ein Gurtsegment gemäß dem Oberbegriff des Anspruchs 1.

Endlos geschlossene Gurte stellen ringförmige Elemente dar, welche z.B. als Antriebsgurte wie z.B. Keilriemen zur Kraftübertragung verwendet werden können. Sie können jedoch auch als Fördergurte dazu verwendet werden, z.B. lose Schüttgüter zu transportieren. Auch können sie verwendet werden, um als Raupenbänder bei Raupenfahrzeugen der Fortbewegung des Fahrzeugs zu dienen.

Derartige Gurte laufen im Allgemeinen um einen Antrieb und weitere Führungs- bzw. Stützrollen herum, um die Antriebsleistung auf ein Abtriebselement zu übertragen (Keilriemen), um die Antriebsleistung zum Materialtransport zu nutzen (Fördergurt) oder ein Fahrzeug fortzubewegen (Raupenband). Hierzu weisen diese Gurte, wie z.B. aus den Druckschriften US 2012/205223 A1 oder US 3 105 390 A bekannt, zum einen eine vorbestimmte Elastizität auf, welche z.B. durch die Verwendung eines Elastomermaterials wie z.B. Gummi als Basismaterial des Gurtes erreicht werden kann. Zum anderen weisen diese Gurte üblicherweise in Längsrichtung einen oder mehrere Festigkeitsträger zur Übertragung der Zugkräfte in Laufrichtung des Gurtes auf. Dies können z.B. Stahlseile sein, welche eine besonders hohe Kraftübertragung erlaufen, aber auch Textilgewebe sind als Festigkeitsträger üblich.

Derartige Gurte können z.B. als Keilriemen teilweise bereits geschlossen hergestellt werden. In den meisten Fällen z.B. als Fördergurte oder Raupenbänder werden die Gurte aufgrund ihrer Länge in Längsrichtung üblicherweise offen, d.h. als länglicher Körper, herstellt und auch so zum Ort der Anwendung transportiert. Dort werden sie dann endlos geschlossen. Dabei kann ein Gurt über seine beiden Enden in sich selbst endlos geschlossen werden oder es können wenigstens zwei Gurtsegmente hintereinander angeordnet und miteinander zu einem Gurt endlos geschlossen werden. Das endlose Schließen kann z.B. durch Zusammenvulkanisieren der beiden Enden erfolgen, was jedoch ein zerstörungsfreies Trennen der Enden und damit Öffnen des Gurtes z.B. bei Verschleiß oder Beschädigung ausschließt. Ferner ist hierzu ein großer Aufwand vor Ort der Anwendung erforderlich.

Daher ist es bekannt, die Enden der Festigkeitsträger an den beiden Enden des offenen Gurtes vom Elastomermaterial freizulassen bzw. freizulegen und diese mechanisch zu verbinden. Dies kann z.B. dadurch erfolgen, dass die jeweiligen Enden in einem jeweils gemeinsamen Kopplungselement eingeklemmt und die beiden Kopplungselemente z.B. scharnierartig mittels eines Kopplungsstabes miteinander verbunden werden. Durch die Aufteilung dieser mechanischen Klemmverbindung auf zwei Kopplungselemente, die dann als Gelenk gegeneinander verdrehbar sind, soll die Biegsamkeit des Gurtes als Ganzes möglichst wenig eingeschränkt werden. Dies kann insbesondere bei kleinen Umlenkradien erforderlich sein.

Die WO 2012 038 155 A1 sowie die WO 2013 174 666 A1 zeigt einen Gurt aus elastomerem Werkstoff mit einer Festigkeitsträgerlage aus in Längsrichtung des Gurtes verlaufenden, parallel zueinander angeordneten Stahlseilen. Die Stahlseilenden sind jeweils in einem Verbindungselement in Form eines Gurtendekörpers durch Verpressen kraftschlüssig eingeklemmt. Die beiden Verbindungselemente weisen jeweils zueinander hin gerichtete und einander seitlich überlappende zinnenartige Vorsprünge auf, die mit Querbohrungen versehen sind. Durch die Querbohrungen kann ein Kopplungsstab geführt werden, gegenüber dem sich die beiden Gurtendekörper gegeneinander drehen können. Hierdurch wird der Gurt endlos geschlossen und die beiden Gurtenden miteinander scharnierartig gekoppelt.

Nachteilig ist hierbei, dass die Werkzeuge, mit denen das Verpressen der Stahlseilenden in den Gurtendekörpern durchgeführt wird, verschleißen können. Dies kann insbesondere deshalb auftreten, weil zum Verpressen der Stahlseilenden im Gurtendekörper sehr hohe Presskräfte erforderlich sein können. Der Verschleiß der Werkzeuge kann die Güte der Pressverbindung beeinflussen und damit zu einer geringeren Haltbarkeit der Pressverbindung führen. Dies kann die maximal übertragbaren Zugkräfte des Gurtes sowie dessen Lebensdauer verringern.

Eine Aufgabe der vorliegenden Erfindung ist es, einen Gurt oder ein Gurtsegment der eingangs beschriebenen Art bereit zu stellen, welcher bzw. welches eine erhöhte Lebensdauer gegenüber bekannten Lösungen aufweist. Insbesondere soll der Verschleiß der Presswerkzeuge, die zum Verpressen der Festigkeitsträgerenden im Verbindungselement verwendet werden, reduziert bzw. vermieden werden.

Die Aufgabe wird erfindungsgemäß durch einen Gurt bzw. ein Gurtsegment mit den Merkmalen gemäß Anspruch 1 gelöst. Vorteilhafte Weiterbildungen sind in den Unteransprüchen beschrieben.

Somit betrifft die vorliegende Erfindung einen Gurt oder ein Gurtsegment mit einer Mehrzahl von in Längsrichtung verlaufenden und parallel zueinander angeordneten Festigkeitsträgern. Die Festigkeitsträger sind vorzugsweise Stahlseile, welche hohe Zugkräfte übertragen können. Unter Längsrichtung ist die Richtung zu verstehen, in der der Gurt bzw. das Gurtsegment endlos geschlossen ist bzw. geschlossen werden kann. Hierzu senkrecht erstreckt sich die Querrichtung, welche auch als Breite bezeichnet werden kann, sowie die Höhe bzw. Dicke des Gurtes bzw. Gurtsegments. Ein Gurt kann durch die Verbindung seiner beiden Enden endlos geschlossen werden oder mehrere Gurtsegmente können über die Verbindung ihrer Enden zu einem Gurt endlos geschlossen werden.

Der Gurt oder das Gurtsegment weist ferner ein Verbindungselement auf, welches ein Ende des Gurtes bzw. des Gurtsegments bildet und zur Verbindung mit einem weiteren Verbindungselement des anderen Endes des Gurts bzw. mit einem Ende eines weiteren Gurtsegments ausgebildet ist. Die Enden der Festigkeitsträger werden von dem Verbindungselement kraftschlüssig durch Verpressen gehalten Das Verbindungselement ist vorzugsweise scharnierartig ausgebildet, so dass es mit einem entsprechenden zweiten Verbindungselement des anderen Endes des Gurtes bzw. eines Endes eines weiteren Gurtsegments ein drehbares Gelenk ausbilden kann. Hierdurch kann ermöglicht werden, dass sich dieser Kopplungsbereich einer Umlenkung des geschlossenen Gurtes um z.B. eine Trommel besser anpassen kann.

Vorzugsweise wird diese Kopplung zwischen den Verbindungselementen durch einen Kopplungsstab realisiert, der in Querrichtung durch Bohrungen der zinnenartigen Vorsprünge der Verbindungselemente hindurchgeführt und gesichert ist. Hierdurch kann diese Verbindung auch lösbar ausgebildet sein.

Der Gurt oder das Gurtsegment ist dadurch gekennzeichnet, dass ein Teilbereich des Verbindungselements als Werkzeugbereich ausgebildet ist, um beim Verpressen der Enden der Festigkeitsträger im Verbindungselement als Werkzeugteil zu dienen. Mit anderen Worten ist das Verpresswerkzeug in dem Verbindungselement integriert ausgebildet. Auf diese Weise kann ein Verschleiß des Verpresswerkzeugs zumindest auf einer Seite des Werkzeugs reduziert bzw. vollständig vermieden werden, weil die verschleißbare Kontur dieser Werkzeugseite im Verbindungselement als Werkstück integriert ausgebildet ist. Somit kann die Seite des Werkzeugs, deren Kontur ins Verbindungselement integriert ist, einfacher und weniger verschleißanfällig ausgebildet werden, z.B. als glatte Fläche, die als Auflagefläche des Verbindungselements dienen kann. Hierdurch kann ein Verschleiß des Werkzeugs durch die sich wiederholenden Verpressvorgänge reduziert bzw. vermieden werden. Dies kann den Verzug des Verbindungselements durch das Verpressen reduzieren. Hierdurch kann der Haltbarkeit der Pressverbindung zwischen Festigkeitsträgern und Verbindungselement verbessert werden.

Das Verpressen erfolgt vorzugsweise in der Richtung der Höhe des Verbindungselements, d.h. senkrecht zur Querrichtung und Längsrichtung. Das Verpressen der Enden der Festigkeitsträger mit dem Verbindungselement kann dadurch erfolgen, dass separate Elemente in Form von Klemmkörpern mit den Enden der Festigkeitsträger verpresst und diese dann vom Verbindungselement z.B. formschlüssig haltend aufgenommen werden können.

Vorzugsweise ist zur Ausbildung des Werkzeugbereichs eine Seite des Verbindungselements flächig geschlossen ausgebildet und weist in der Höhe eine Vertiefung auf, deren innere Kontur als Werkzeugkontur ausgebildet ist. In dieser Vertiefung kann dann das Verpressen der Enden der Festigkeitsträger mit dem Verbindungselement bzw. mit den Klemmkörpern erfolgen.

Vorzugsweise ist die Außenseite des Verbindungselements im Werkzeugbereich geschlossen und glattflächig ausgebildet, so dass das Verbindungselement auf einer glatten Werkzeugseite wie z.B. einem Pressenstempel einer Presse flach aufgelegt werden kann. Dies vereinfacht den Aufbau des Pressenstempels auf dieser Seite und reduziert dort den Verschleiß erheblich, weil beim Verpressen aneinander reibende Flächen zwischen Werkstück und Werkzeug vermieden werden können. Auch können hierdurch die Herstellungskosten des Werkzeugs reduziert werden, weil ein glattflächiges Werkzeug deutlich einfacher herzustellen ist als ein Werkzeug mit einer Kontur.

Vorteilhaft ist hierbei auch, dass aufgrund des in Längsrichtung geschlossenen Materials des Verbindungselements Zugkräfte in Längsrichtung ganzflächig übertragen werden können. Dies kann einen Verzug des Verbindungselements bei Belastung reduzieren bzw. vermeiden helfen. Auch können die Presskräfte beim Verpressen auf diese Weise besser von Verbindungselement aufgenommen werden, so dass auch ein Verzug des Verbindungselements durch das Verpressen reduziert bzw. vermieden werden kann.

Gemäß einem Aspekt der vorliegenden Erfindung weist der Werkzeugbereich in einer Richtung zu den Enden der Festigkeitsträger hin eine Kontur auf, welche mit der Kontur eines Verpresswerkzeugs derart zusammenwirken kann, dass ein Verpressen der Enden der Festigkeitsträger im Verbindungselement erreicht werden kann. Hierdurch wird die Kontur einer Werkzeugseite auf das Verbindungselement übertragen bzw. in dieses integriert, so dass die Wirkung des Verpressens auf ein zu verpressendes Objekt gleichbleibt, jedoch die zuvor beschriebenen Vorteile erreicht werden können.

Gemäß einem weiteren Aspekt der vorliegenden Erfindung können die Enden der Festigkeitsträger mit wenigstens einem Klemmkörper im Verbindungselement kraftschlüssig verbunden werden, wobei der Klemmkörper beim Verpressen von der einen Seite in einer Richtung durch den Werkzeugbereich des Verbindungselements gestützt und von der gegenüberliegenden Seite in der Richtung von einem Verpresswerkzeug verpresst werden kann.

Gemäß einem weiteren Aspekt der vorliegenden Erfindung kann der Klemmkörper von dem Verbindungselement wenigstens in Längsrichtung formschlüssig gehalten werden. Diesem Aspekt der vorliegenden Erfindung liegt dabei der Gedanke zu Grunde, auf diese Weise eine Funktionstrennung der Verbindung der Enden der Festigkeitsträger mit dem Verbindungselement zu erreichen. Somit erfolgt die geklemmte Verbindung der Enden der Festigkeitsträger in dem Klemmkörper, der einen separaten Körper gegenüber dem Verbindungselement darstellt. Der Klemmkörper wird dabei seinerseits vom Verbindungselement derart aufgenommen, dass eine formschlüssige Verbindung in Längsrichtung hergestellt werden kann. Auf diese Weise können eine plastische Verformung des Verbindungselements durch das Verpressen, das zur Herstellung der kraftschlüssigen Verbindung zwischen den Enden der Festigkeitsträger mit dem Klemmkörper durch Verpressen erforderlich ist, reduziert bzw. vermieden werden. Hierdurch kann der bisher auftretende Verzug des Verbindungselements vermieden bzw. reduziert werden. Dies kann auch den hierdurch erzeugten erhöhten Abrieb zweier Verbindungselemente aneinander reduzieren oder sogar vermeiden und damit die Lebensdauer des Gurtes bzw. des Gurtsegments bzw. deren Kopplung erhöhen. Gleichzeitig kann die hohe Haltbarkeit der kraftschlüssigen Verbindung beibehalten werden.

Vorteilhaft ist ferner, dass die Materialien der Klemmkörper und Verbindungselemente nun auf den jeweiligen Zweck optimiert ausgelegt werden können. Hierzu können unterschiedliche Materialien verwendet werden, z.B. ein Stahl mit guter plastischer Verformbarkeit bei gleichzeitiger hoher Festigkeit für den Klemmkörper und ein harter oder härtbarer Stahl mit hoher Verschleißfestigkeit und Zugfestigkeit für das Verbindungselement. Hierdurch kann die Verformbarkeit des Klemmkörpers beim Verpressen und die Stabilität des Verbindungselements bei Zugbelastung jeweils optimiert werden.

Vorzugsweise ist das Verbindungselement derart ausgebildet, dass es sich vollständig in den Querschnitt des Gurtes bzw. des Gurtsegments integrieren lässt. Hierunter ist zu verstehen, dass das Verbindungselement weder in der Höhe noch in der Breite über die Kontur des Gurtes bzw. Gurtsegments hinausragt. Auf diese Weise kann ein Einfluss auf das Laufverhalten des endlos geschlossenen Gurtes vermieden werden.

Gemäß einem Aspekt der vorliegenden Erfindung ist das Material des Klemmkörpers relativ zum Material des Verbindungselements weicher. Unter "weich" ist hierbei eine bessere Fließfähigkeit oder plastische Verformbarkeit des Materials des Klemmkörpers in Relation zum Material des Verbindungselements zu verstehen. Beispielsweise kann als Material des Klemmkörpers z.B. ein rostfreier Edelstahl wie z.B. V4A verwendet werden. Als Material des Verbindungselements kann z.B. ein harter oder härtbarer Stahl eingesetzt werden. Das vergleichsweise weiche Material des Klemmkörpers begünstigt ein gutes Verpressen mit den Enden des Festigkeitsträgers wie z.B. Stahlseile. Dies kann die Klemmwirkung bei gleicher Presskraft erhöhen bzw. die erforderliche Presskraft zur Herstellung der kraftschlüssigen Verbindung reduzieren. Das Material des Verbindungselements kann durch seine vergleichsweise hohe Härte hohe Belastungen aufnehmen und hierdurch einem Verzug entgegenwirken. Ebenso kann hierdurch grundsätzlich der Verschleiß durch Abrieb reduziert werden.

Vorteilhaft ist dabei auch, dass das Verbindungselement durch ein Guß- oder Schmiedeteil hergestellt werden kann, was die Herstellungskosten reduzieren kann. Der Klemmkörper kann gleichzeitig durch einen kleinen und geometrisch einfachen Körper realisiert werden, was ebenfalls die Herstellungskosten reduzieren kann.

Gemäß einem weiteren Aspekt der vorliegenden Erfindung sind wenigstens zwei Enden der Festigkeitsträger mit einem gemeinsamen Klemmkörper oder jeweils einzeln mit einem Klemmkörper kraftschlüssig verbunden.

Die Enden der Festigkeitsträger mit einem gemeinsamen Klemmkörper zu verbinden ist vorteilhaft, weil ein größerer Klemmkörper einfacher hergestellt, gehandhabt und bzw. oder montiert werden kann, was die Herstellung- und Montagekosten reduzieren kann. Vorzugweise sind alle Enden der Festigkeitsträger in einem gemeinsamen Klemmkörper eingeklemmt. Dies hat den Vorteil, dass die eingeklemmten Festigkeitsträger gemeinsam einfacher zu handhaben sind.

Die Enden der Festigkeitsträger jeweils einzeln mit einem Klemmkörper zu verbinden ist vorteilhaft, weil hierdurch kleinere Klemmkörper verwendet werden können, was die Variantenvielfalt reduzieren kann. Vorzugweise sind alle Enden der Festigkeitsträger jeweils mit einem einzelnen Klemmkörper verbunden. Hierdurch kann ein einheitlicher Klemmkörper wiederholend verwendet werden, auch für Gurte bzw. Gurtsegmente mit einer unterschiedlichen Anzahl von Festigkeitsträgern, was die Herstellungskosten reduzieren kann. Mit anderen Worten kann darauf verzichtet werden, unterschiedliche Klemmkörper für unterschiedliche Gurte bzw. Gurtsegmente herstellen und bereitstellen zu müssen.

Gemäß einem weiteren Aspekt der vorliegenden Erfindung weist das Verbindungselement wenigstens eine Klemmkörperaufnahme auf, welche zumindest abschnittweise als Werkzeugbereich ausgebildet ist, wobei wenigstens ein mit einem Klemmkörper versehenes Ende eines Festigkeitsträgers aufgenommen und wenigstens in Längsrichtung formschlüssig gehalten werden kann. Durch die Klemmkörperaufnahme innerhalb der Abmaße des Verbindungselements kann ein Platz geschaffen werden, an dem der Klemmkörper vom Verbindungselement aufgenommen werden kann, um formschlüssig Halt zu finden.

Gemäß einem weiteren Aspekt der vorliegenden Erfindung ist die Klemmkörperaufnahme ausgebildet, einen Klemmkörper aufzunehmen, mit dem die Enden mehrerer Festigkeitsträger oder mit dem das Ende eines Festigkeitsträgers kraftschlüssig verbunden sind bzw. ist.

Durch einen Klemmkörper, mit dem die Enden mehrerer Festigkeitsträger kraftschlüssig verbunden sind, kann ein Platz zur Aufnahme eines derartigen Klemmkörpers durch das Verbindungselement geschaffen werden, welche aufgrund ihrer Größe einfacher und schneller herzustellen sein kann als mehrere kleinere Klemmkörperaufnahmen.

Durch einen Klemmkörper, mit dem das Ende eines Festigkeitsträgers kraftschlüssig verbunden ist, wird ein Platz zur Aufnahme eines derartigen Klemmkörpers durch das Verbindungselement geschaffen, d.h. für sehr kleine Klemmkörper, die jeweils nur ein einzelnes Ende eines Festigkeitsträgers in sich aufnehmen können.

Gemäß einem weiteren Aspekt der vorliegenden Erfindung weist das Verbindungselement wenigstens zwei Klemmkörperaufnahmen auf, in denen jeweils wenigstens ein mit einem Klemmkörper versehenes Ende eines Festigkeitsträgers aufgenommen und wenigstens in Längsrichtung formschlüssig gehalten werden kann, wobei die beiden Klemmkörperaufnahmen in Querrichtung durch einen in Längsrichtung verlaufenden Steg voneinander getrennt sind. Auf diese Weise kann die Übertragung von Zugkräften in Längsrichtung verbessert werden, weil diese nicht nur über die seitlichen Kanten des Verbindungselements sondern auch durch die Stege zwischen den Klemmkörperaufnahmen direkt übertragen werden können. Hierdurch kann die Verformung des Verbindungselements reduziert werden.

Gemäß einem weiteren Aspekt der vorliegenden Erfindung weist das Verbindungselement wenigstens eine Festigkeitsträgerdurchführung, vorzugsweise in Form einer Bohrung und bzw. oder in Form einer Nut, auf, durch die wenigstens ein Festigkeitsträger in Längsrichtung in eine Klemmkörperaufnahme geführt werden kann. Der Bereich des Verbindungselements, durch den ein Festigkeitsträger durch die Festigkeitsträgerdurchführung hindurch in die Klemmkörperaufnahme austreten kann, bildet den Anschlag des Klemmkörpers für den formschlüssigen Halt des Verbindungselements.

Vorzugsweise ist die Festigkeitsträgerdurchführung als Bohrung durch das Verbindungselement ausgebildet. Auf diese Weise kann die Festigkeitsträgerdurchführung ringsherum vom Material des Verbindungselements umgeben sein, so dass die Kräfte des Formschlusses gleichmäßig übertragen werden können. Hierdurch kann eine größere Stabilität erzeugt werden. Dabei ist es erforderlich, dass die Enden der Festigkeitsträger durch die Bohrungen hindurch in die Klemmkörperaufnahme gesteckt werden, wo sie in entsprechende Aufnahmen des Klemmkörpers eingeführt und dann dort verpresst werden können.

Vorzugsweise ist die Festigkeitsträgerdurchführung als Nut durch das Verbindungselement ausgebildet. Mit anderen Worten ist das Material des Verbindungselements in der Höhe unterbrochen, so dass die mit dem Klemmkörper versehenen Enden der Festigkeitsträger von einer Seite in die Nuten eingelegt werden können. Hierbei wird gleichzeitig der Klemmkörper in die Klemmkörperaufnahme eingelegt. Auf diese Weise kann das Verpressen unabhängig vom Verbindungselement vor diesem Schritt erfolgen.

Gemäß einem weiteren Aspekt der vorliegenden Erfindung weist der Gurt oder das Gurtsegment ferner eine Abdeckung auf, welche die Nut und bzw. oder die Klemmkörperaufnahme senkrecht zur Längsrichtung verschließen kann. Auf diese Weise können die in die Nuten eingeführten Festigkeitsträger bzw. der in der Klemmkörperaufnahme aufgenommene Klemmkörper dort durch die Abdeckung geschützt werden. Weiterhin können durch die Abdeckung die Reibungswerte des Gelenkes an die Oberfläche des Gurtes und die optische Erscheinung des Gurtes beeinflusst werden.

Gemäß einem weiteren Aspekt der vorliegenden Erfindung ist die Festigkeitsträgerdurchführung in Längsrichtung in entgegengesetzter Richtung zu den Enden der Festigkeitsträger aufgeweitet ausgebildet. Auf diese Weise kann insbesondere bei einer Biegung des Gurtes z.B. an einer Trommel ein Einknicken der Festigkeitsträger vermieden werden. Mit anderen Worten kann erreicht werden, dass die Festigkeitsträger immer in der neutralen Phase verlaufen können. Dies vermeidet Beschädigungen der Festigkeitsträger und erhöht deren Lebensdauer bzw. die Lebensdauer des Gurtes.

Vorzugsweise ist die Aufweitung der Festigkeitsträgerdurchführung kegelförmig ausgebildet. Hierdurch kann der zuvor beschriebenen Vorteile einfach umgesetzt werden. Dies gilt ebenso für eine hyperbolische Form der Aufweitung.

Gemäß einem weiteren Aspekt der vorliegenden Erfindung weist der Gurt bzw. das Gurtsegment einen elastomeren Grundkörperauf, in dem die Festigkeitsträger eingebettet sind, wobei die Enden der Festigkeitsträger von dem Material des elastomeren Grundkörpers freigelegt sind. Das Material des elastomeren Grundkörpers ist vorzugsweise ein vulkanisiertes Gummi. Auf diese Weise kann ein elastischer Gurt bzw. ein elastisches Gurtsegment geschaffen werden. Hierbei ist unter dem Freilegen der Enden der Festigkeitsträger ein äußeres Freilegen von dem elastomeren Material des Grundkörpers zu verstehen, so dass die Enden der Festigkeitsträger wie z.B. Stahlseile nach außen blank erscheinen und aufgrund ihres geringen Querschnitts in die Klemmkörperaufnahmen des Klemmkörpers eingeführt und dort verpresst werden können.

Gemäß einem weiteren Aspekt der vorliegenden Erfindung weist das Verbindungselement an seiner gurtinneren Seite eine halbkreisförmige Einbuchtung auf. Diese Einbuchtung ist halbschalenförmig ausgebildet und entspricht in ihrem Radius dem Radius z.B. einer Trommel, auf dem der Gurt bzw. dessen Kopplungsbereich umgelenkt werden kann. Diese Einbuchtung erleichtert das Abrollen auf der Trommel und kann ein Einknicken der Festigkeitsträger vermeiden helfen, so dass die Festigkeitsträger auch beim Abrollen stets in der neutralen Phase bleiben können. Hierdurch kann ein Einknicken der Festigkeitsträger vermieden und deren Lebensdauer bzw. die Lebensdauer des Gurtes erhöht werden.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen Verbindungselements von unten;
- Fig. 2: eine durchsichtige Darstellung der Fig. 1;
- Fig. 3: eine perspektivische schematische Darstellung des erfindungsgemäßen Verbindungselements von oben;
- Fig. 4: eine durchsichtige Darstellung der Fig. 3;
- Fig. 5: eine perspektivische schematische Darstellung eines Gurtendes mit erfindungsgemäßem Verbindungselement von unten;
- Fig. 6: einen Querschnitt der Darstellung der Fig. 5;
- Fig. 7: einen Gurt mit erfindungsgemäßen Verbindungselementen von oben; und
- Fig. 8: einen Querschnitt durch eine Werkzeugmaschine zum Herstellen einer Pressverbindung in einem erfindungsgemäßen Verbindungselement.

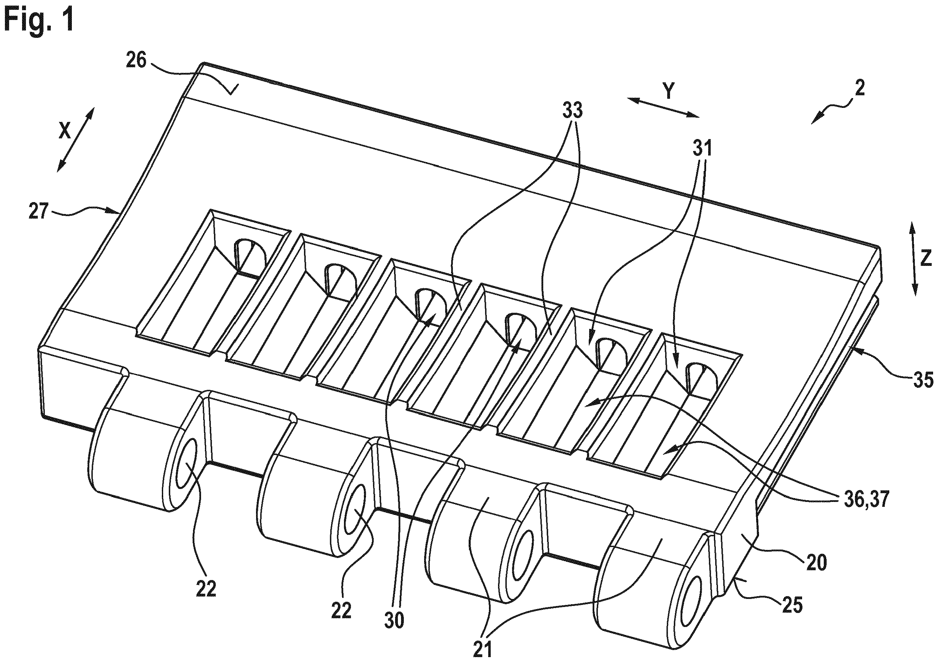

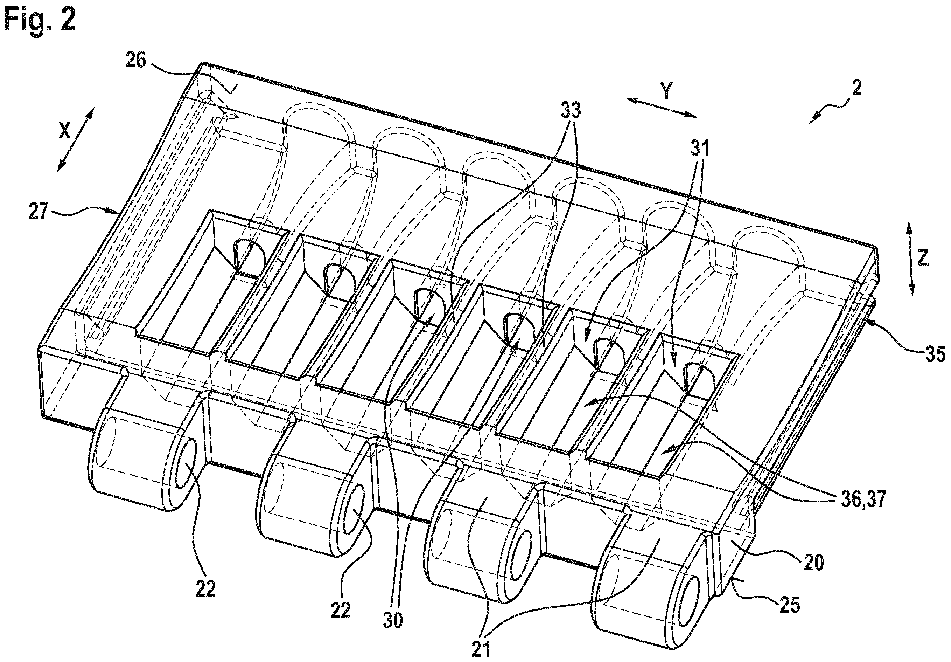

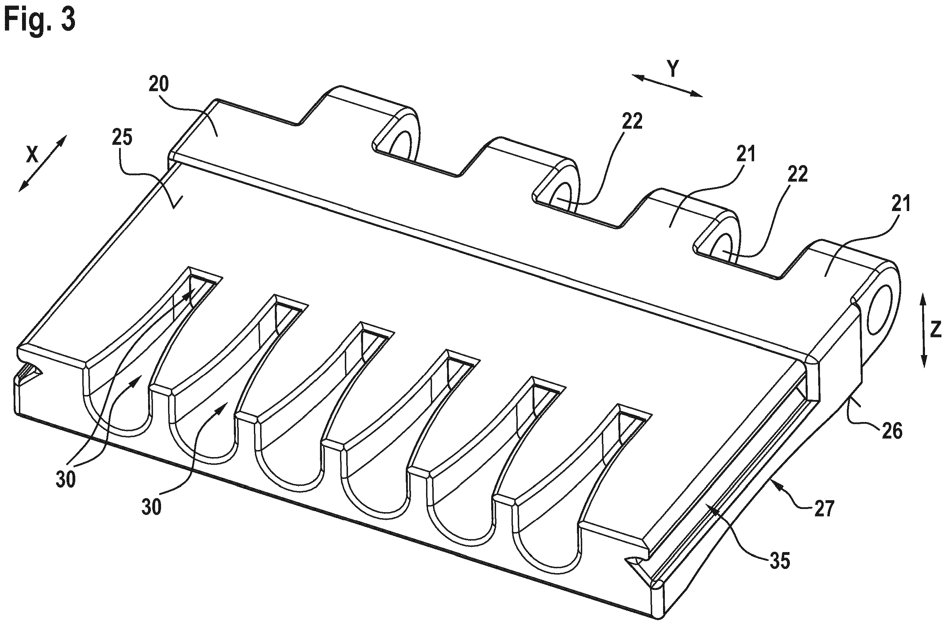

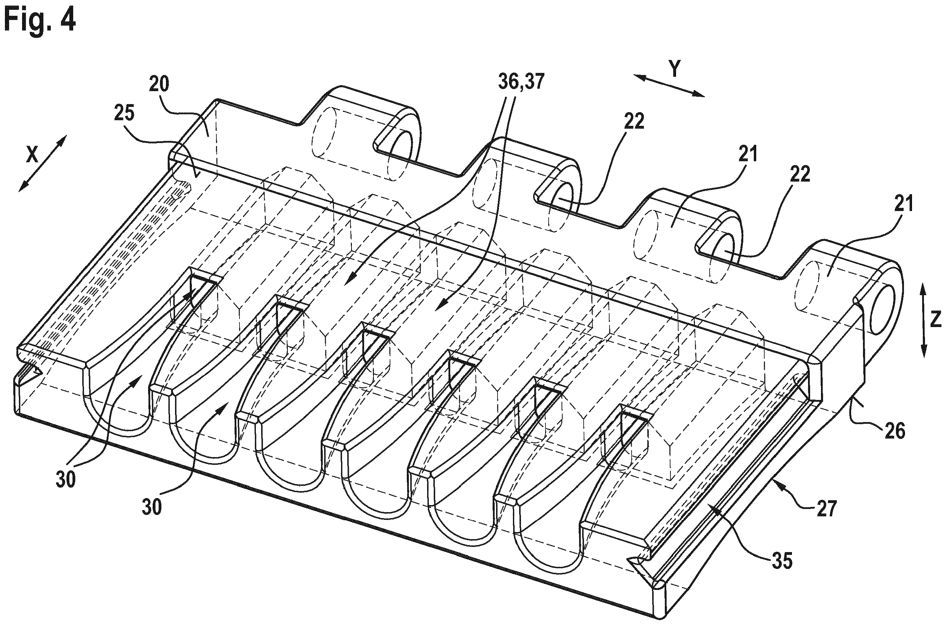

Die Fig. 1 zeigt eine perspektivische schematische Darstellung eines erfindungsgemäßen Verbindungselements 2 von unten. Die Fig. 2 zeigt eine durchsichtige Darstellung der Fig. 1. Die Fig. 3 zeigt eine perspektivische schematische Darstellung des erfindungsgemäßen Verbindungselements 2 von oben. Die Fig. 4 zeigt eine durchsichtige Darstellung der Fig. 3.

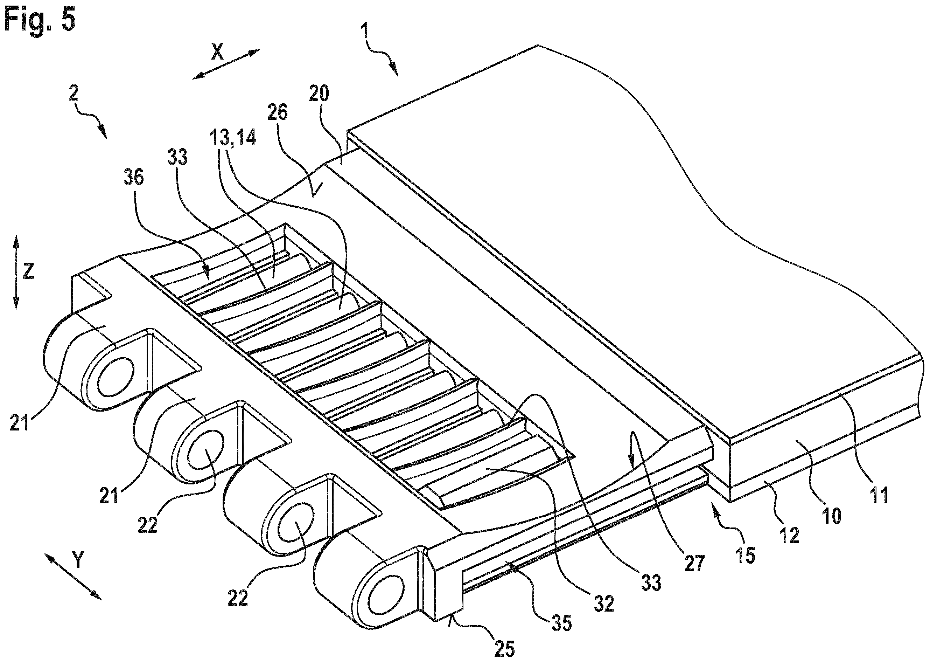

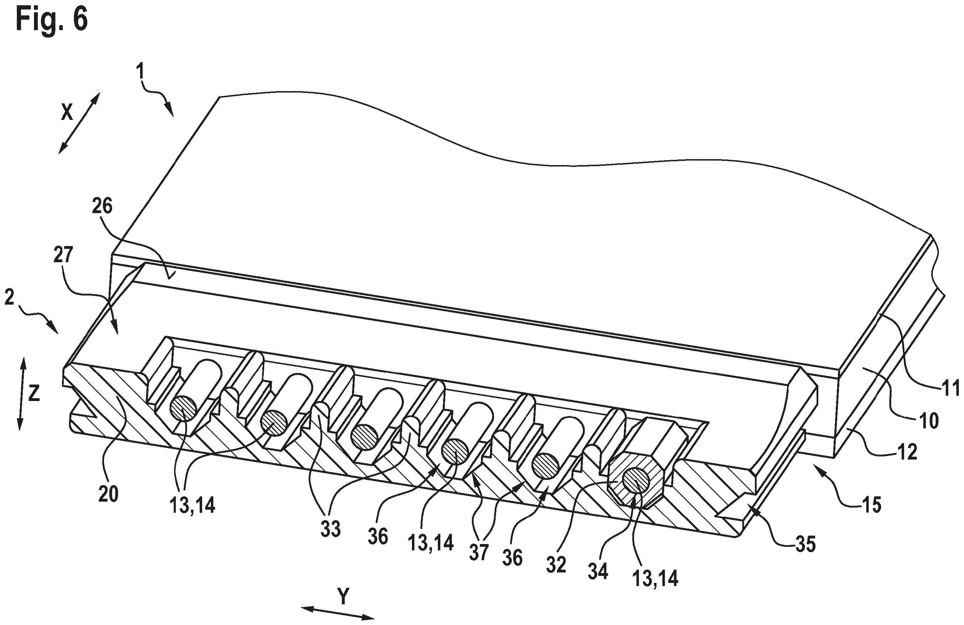

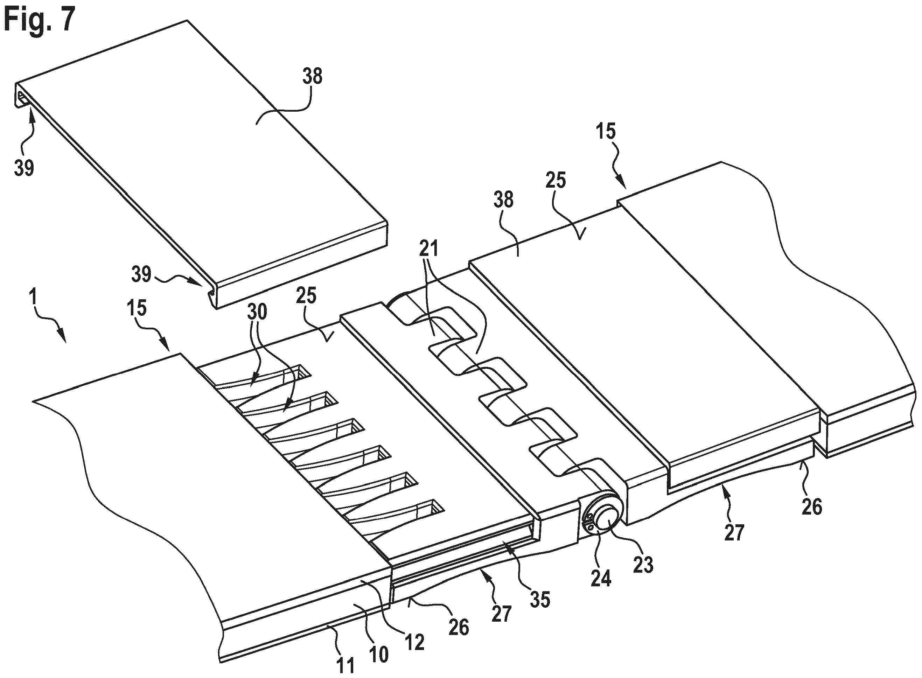

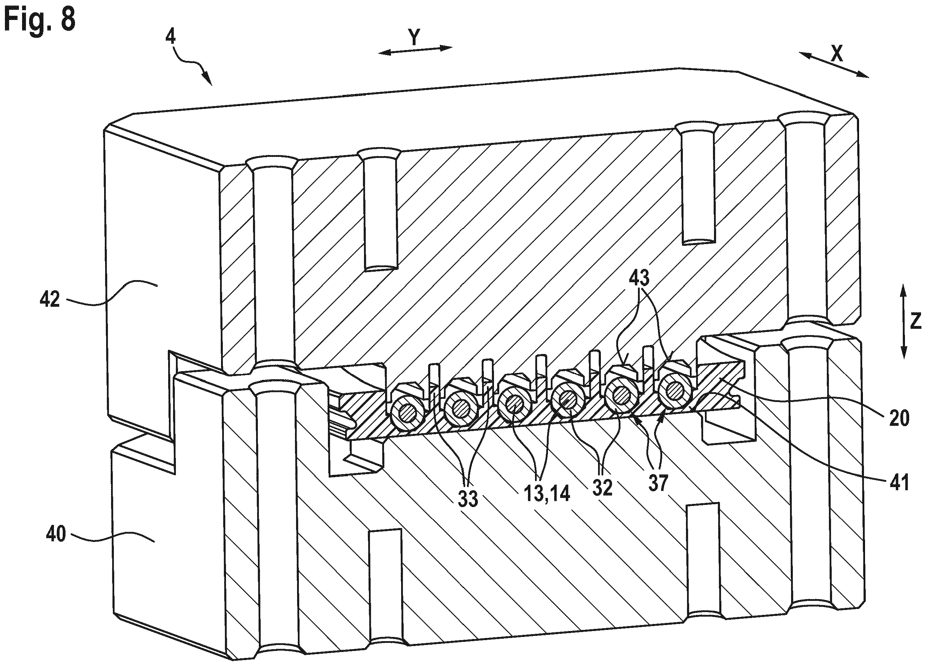

Das Verbindungselement 2 weist eine Längsrichtung X auf. Hierzu senkrecht erstreckt sich eine Querrichtung Y, welche auch als Breite Y bezeichnet werden kann. Hierzu jeweils senkrecht erstreckt sich eine Höhe Z, welche auch als Dicke Z bezeichnet werden kann. Diese Richtungsangaben in kartesischen Koordinaten gelten entsprechend für ein Gurtende 15, welches in den Fig. 5 und 6 dargestellt ist, einen Gurt 1, welcher in der Fig. 7 dargestellt ist, sowie eine Werkzeugmaschine 4 gemäß der Fig. 8.

Das Verbindungselement 2 weist einen Grundkörper 20 auf, welcher aus einem harten oder härtbaren Stahl besteht. Der Grundkörper 20 weist an seiner einen Kante in Längsrichtung X mehrere zinnenartige Vorsprünge 21 auf, welche jeweils in Querrichtung Y verlaufende Querbohrungen 22 aufweisen. Der Grundkörper 20 weist eine gurtäußere Seite 25 auf, welche die Oberseite 25 des Grundkörpers 20 bildet. Der Grundkörper 20 weist ferner eine gurtinnere Seite 26 auf, welche die Unterseite 26 des Grundkörpers 20 bildet. Die Unterseite 26 des Gurtkörpers 20 weist eine Einbuchtung 27 auf, welche halbkreisförmig ausgebildet ist und in ihrem Radius dem äußeren Radius z.B. einer Trommel entspricht, um die der Gurt 1 umlaufend kann (vgl. Fig. 5 und 6). In Querrichtung Y weisen die seitlichen Kanten des Verbindungselements 2 jeweils eine Rastaufnahme 35 zum Einrasten einer von Rasthaken 39 einer Abdeckung 38 auf, welche U-förmig die Oberseite 25 des Grundkörpers 20 überdecken kann (vgl. Fig. 7).

Das Verbindungselement 2 weist ferner eine Mehrzahl von Klemmkörperaufnahmen 31 auf, welche als rechteckige Aussparungen innerhalb des Grundkörpers 20 ausgebildet und durch mehrere in Längsrichtung X ausgebildete Stege 33 in einzelne Klemmkörperaufnahmen 31 geteilt sind. Die Stege 33 können Kräfte in Längsrichtung X übertragen und hierdurch einem Verzug des Verbindungselements 2 aufgrund von Belastungen in Längsrichtung X entgegenwirken.

Die Klemmkörperaufnahmen 31 sind zur Oberseite 25 hin geschlossen (vgl. Fig. 3 und 4) und zur Unterseite 26 hin offen (vgl. Fig. 1 und 2) ausgebildet. Die Klemmkörperaufnahmen 31 sind an ihrer Innenseite in der Höhe Z jeweils als Werkzeugbereich 36 ausgebildet und weisen jeweils eine Kontur 37 auf, die der einer Werkzeugseite entspricht. Von den Klemmkörperaufnahmen 31 erstrecken sich mehrere Festigkeitsträgerdurchführungen 30 in Form von Bohrungen 30 in Längsrichtung X in entgegengesetzter Richtung zu den zinnenartigen Vorsprüngen 21 durch den Grundkörper 20 hindurch und werden dort zu Nuten 30, die zur Unterseite 26 hin offen ausgebildet sind. Zum Gurt 1 hin sind die Nuten 30 aufgeweitet ausgebildet.

Die Fig. 5 zeigt eine perspektivische schematische Darstellung eines Gurtendes 15 mit erfindungsgemäßem Verbindungselement 2 von unten. Die Fig. 6 zeigt einen Querschnitt der Darstellung der Fig. 5. Die Fig. 7 zeigt einen Gurt 1 mit erfindungsgemäßen Verbindungselementen 2 von oben.

In den Klemmkörperaufnahmen 31 sind jeweils entsprechend geformte Klemmkörper 32 angeordnet, wobei in den Darstellungen der Fig. 5 und 6 jeweils nur ein Klemmkörper 32 dargestellt ist. Innerhalb der Klemmkörper 32 sind die Enden 14 von Festigkeitsträgern 13 in Form von Stahlseilen 13 durch Verpressen jeweils in einer Festigkeitsträgeraufnahme 34 eines Klemmkörpers 32 verpresst, wobei in den Darstellungen der Fig. 5 und 6 die Enden 14 der Stahlseile 13 aufgrund der mehreren nicht-dargestellten Klemmkörper 32 sichtbar sind. Die Stahlseile 13 sind hierzu an ihren Enden 14 von dem Material eines elastomeren Grundkörpers 10 des Gurtes 1 freigelegt. Der elastomere Grundkörper 10 weist in der Höhe Z eine untere elastomere Deckschicht 11 und eine obere elastomere Deckschicht 12 auf. Die freigelegten Enden 14 der Stahlseile 13 mit den Klemmkörpern 32 sowie dem Verbindungselement 2 bilden gemeinsam das Gurtende 15.

Die beiden Verbindungselemente 2 zweier Gurtenden 15 desselben Gurts 1 oder zweier Gurtsegmente 1 können mittels eines Kopplungsstabs 23 durch ihre Querbohrungen 22 miteinander gelenksartig verbunden werden (Fig. 7). Der Kupplungsstab 23n kann in dieser Position in Querrichtung Y beidseitig durch Kopplungsstabsicherungen 24 gesichert werden.

Erfindungsgemäß weisen die unteren Innenseiten der Klemmkörperaufnahmen 31 jeweils eine Kontur 37 auf, die der Kontur einer Werkzeugseite entspricht, welche zum Verpressen der Klemmkörper 32 mit den Enden 14 der Festigkeitsträger 13 geeignet ist. Aufgrund dieser Kontur 37 bilden die unteren Innenseiten der Klemmkörperaufnahmen 31 jeweils einen Werkzeugbereich 36, der daher nicht mehr durch ein Werkzeugunterteil 40 einer Werkzeugmaschine 4 bereitgestellt werden muss (vgl. Fig. 8). Somit kann das Verbindungselement 2 in Längsrichtung X und Querrichtung Y flächig geschlossen ausgebildet werden, d.h. ohne Aussparungen, durch die ein Werkzeugunterteil 40 zum Verpressen der Klemmkörper 32 durch das Verbindungselement 2 durchgreifen müsste. Dies kann die Stabilität des Verbindungselements 2 insbesondere gegenüber den in Längsrichtung X wirkenden Zugkräften im Einsatz des Gurtes 1 erhöhen. Auch kann ein Verschleiß des Werkzeugunterteils 40 hierdurch vermieden werden.

Die Fig. 8 zeigt einen Querschnitt durch eine Werkzeugmaschine 4 zum Herstellen einer Pressverbindung in einem erfindungsgemäßen Verbindungselement 2. Die Werkzeugmaschine 4 stellt eine Presse 4 dar und weist ein Werkzeugunterteil 40 auf, welches einen Pressenstempel 40 bildet, sowie ein Werkzeugoberteil 42, welches ein Presswerkzeug 42 bildet. Der Pressenstempel 40 weist eine Auflagefläche 41 auf, auf der das Verbindungselement 2 mit seiner Unterseite 26 flach aufgelegt ist. Die Kontur 43 des Presswerkzeugs 42 ist entsprechend der Kontur 37 des Werkzeugbereichs 36 des Verbindungselements 2 ausgebildet und zum Verbindungselement 2 hin ausgerichtet.

Zum Verpressen der Enden 14 der Festigkeitsträger 13 werden diese durch die Nuten 30 bzw. Bohrungen 30 in die Festigkeitsträgeraufnahmen 34 der Klemmkörper 32 eingeführt, welche hierzu zuvor in den Klemmkörperaufnahmen 31 des Verbindungselements 2 angeordnet werden. In dieser Form wird dann das Verbindungselement 2 in die Presse 4 auf die Auflagefläche 41 des Pressenstempels 40 eingelegt und gegenüber der Kontur 43 des Verpresswerkzeugs 42 derart positioniert, dass das Verpresswerkzeug 42 von oben in der Höhe Z in die Klemmkörperaufnahmen 31 einfahren kann. Hierbei presst das Verpresswerkzeug 42 die Klemmkörper 32 gegen die Konturen 37 der Werkzeugbereiche 36 einer jeden Klemmkörperaufnahme 31, welche ihrerseits von unten in der Höhe Z von der Auflagefläche 41 des Pressenstempels 40 abgestützt werden. Das gegenüber dem Material des Verbindungselements 2 weichere Material der Klemmkörper 32 wird hierdurch plastisch verformt und bildet so eine kraftschlüssige Verbindung mit den Enden 14 der Festigkeitsträger 13. Die kraftschlüssig verpressten Klemmkörper 32 werden ihrerseits innerhalb der Klemmkörperaufnahmen 31 in Längsrichtung X formschlüssig gehalten, so dass die Festigkeitsträger 13 in Längsrichtung X Zugkräfte übertragen können.

### Bezugszeichenliste (Teil der Beschreibung)

- X: Längsrichtung des Gurtes 1 bzw. Gurtsegments 1
- Y: Querrichtung bzw. Breite des Gurtes 1 bzw. Gurtsegments 1
- Z: Höhe bzw. Dicke des Gurtes 1 bzw. Gurtsegments 1

- 1: Gurt bzw. Gurtsegment
- 10: elastomerer Grundkörper
- 11: untere elastomere Deckschicht
- 12: obere elastomere Deckschicht
- 13: Festigkeitsträger bzw. Stahlseile
- 14: Ende der Festigkeitsträger 13
- 15: Gurtende bzw. Gurtsegmentende

- 2: Verbindungselemente
- 20: Grundkörper
- 21: zinnenartige Vorsprünge
- 22: Querbohrungen der zinnenartigen Vorsprünge
- 23: Kopplungsstab
- 24: Kopplungsstabsicherung
- 25: gurtäußere Seite bzw. Oberseite des Grundkörpers 20
- 26: gurtinnere Seite bzw. Unterseite des Grundkörpers 20
- 27: Einbuchtung der Unterseite 26

- 30: Festigkeitsträgerdurchführung des Grundkörpers 20, Bohrung bzw. Nut
- 31: Klemmkörperaufnahmen
- 32: Klemmkörper
- 33: Stege des Grundkörpers 20 in Längsrichtung X
- 34: Festigkeitsträgeraufnahmen der Klemmkörper 32
- 35: Rastaufnahme für Abdeckung
- 36: Werkzeugbereich bzw. Teilbereich des Verbindungselements 2
- 37: Kontur des Werkzeugbereichs 36
- 38: Abdeckung
- 39: Rasthaken der Abdeckung 38

- 4: Werkzeugmaschine, Presse
- 40: Werkzeugunterteil, Pressenstempel
- 41: Auflagefläche des Werkzeugunterteils 40
- 42: Werkzeugoberteil, Verpresswerkzeug
- 43: Kontur des Werkzeugoberteils 42

## Patentansprüche

1. Gurt (1) oder Gurtsegment (1), mit
einer Mehrzahl von in Längsrichtung (X) verlaufenden und parallel zueinander angeordneten Festigkeitsträgern (13), und
einem Verbindungselement (2), welches ein Ende (15) des Gurtes (1) bzw. des Gurtsegments (1) bildet und zur Verbindung mit einem weiteren Verbindungselement (2) des anderen Endes (15) des Gurts (1) bzw. mit einem Ende (15) eines weiteren Gurtsegments (1) ausgebildet ist,
wobei die Enden (14) der Festigkeitsträger (13) mit wenigstens einem Klemmkörper (32) durch Verpressen kraftschlüssig verbunden sind, und
wobei der Klemmkörper (32) von dem Verbindungselement (2) wenigstens in Längsrichtung (X) formschlüssig gehalten werden kann,
**dadurch gekennzeichnet, dass**
ein Teilbereich (36) des Verbindungselements (2) als Werkzeugbereich (36) ausgebildet ist, um beim Verpressen der Enden (14) der Festigkeitsträger (13) im Klemmkörper (32) als Werkzeugteil zu dienen,
wobei die Enden (14) der Festigkeitsträger (13) mit dem Klemmkörper (32) im Verbindungselement (2) durch Verpressen kraftschlüssig verbunden wurden.

2. Gurt (1) oder Gurtsegment (1) gemäß Anspruch 1,
wobei der Werkzeugbereich (36) in einer Richtung (Z) zu den Enden (14) der Festigkeitsträger (13) hin eine Kontur (37) aufweist, welche mit der Kontur (43) eines Verpresswerkzeugs (42) derart zusammenwirken kann, dass ein Verpressen der Enden (14) der Festigkeitsträger (13) im Verbindungselement (2) erreicht werden kann.

3. Gurt (1) oder Gurtsegment (1) gemäß Anspruch 1 oder 2,
wobei der Klemmkörper (32) beim Verpressen von der einen Seite in einer Richtung (Z) durch den Werkzeugbereich (36) des Verbindungselements (2) gestützt und von der gegenüberliegenden Seite in der Richtung (Z) von einem Verpresswerkzeug (42) verpresst werden kann.

4. Gurt (1) oder Gurtsegment (1) gemäß einem der vorherigen Ansprüche,
wobei das Material des Klemmkörpers (32) relativ zum Material des Verbindungselements (2) weicher ist.

5. Gurt (1) oder Gurtsegment (1) gemäß einem der vorherigen Ansprüche,
wobei wenigstens zwei Enden (14) der Festigkeitsträger (13) mit einem gemeinsamen Klemmkörper (32) oder jeweils einzeln mit einem Klemmkörper (32) kraftschlüssig verbunden sind.

6. Gurt (1) oder Gurtsegment (1) gemäß einem der vorherigen Ansprüche,
wobei das Verbindungselement (2) wenigstens eine Klemmkörperaufnahme (31) aufweist, welche zumindest abschnittweise als Werkzeugbereich () ausgebildet ist, wobei wenigstens ein mit einem Klemmkörper (32) versehenes Ende (14) eines Festigkeitsträgers (13) in der Klemmkörperaufnahme (31) aufgenommen und wenigstens in Längsrichtung (X) formschlüssig gehalten werden kann.

7. Gurt (1) oder Gurtsegment (1) gemäß Anspruch 6,
wobei die Klemmkörperaufnahme (31) ausgebildet ist, einen Klemmkörper (32) aufzunehmen, mit dem die Enden (14) mehrerer Festigkeitsträger (13) oder mit dem das Ende (14) eines Festigkeitsträgers (13) kraftschlüssig verbunden sind bzw. ist.

8. Gurt (1) oder Gurtsegment (1) gemäß einem der Ansprüche 6 oder 7,
wobei das Verbindungselement (2) wenigstens zwei Klemmkörperaufnahmen (31) aufweist, in denen jeweils wenigstens ein mit einem Klemmkörper (32) versehenes Ende (14) eines Festigkeitsträgers (13) aufgenommen und wenigstens in Längsrichtung (X) formschlüssig gehalten werden kann,
wobei die beiden Klemmkörperaufnahmen (31) in Querrichtung (Y) durch einen in Längsrichtung (X) verlaufenden Steg (33) voneinander getrennt sind.

9. Gurt (1) oder Gurtsegment (1) gemäß einem der Ansprüche 6 bis 8,
wobei das Verbindungselement (2) wenigstens eine Festigkeitsträgerdurchführung (30), vorzugsweise in Form einer Bohrung (30) und/oder in Form einer Nut (30), aufweist, durch die wenigstens ein Festigkeitsträger (13) in Längsrichtung (X) in eine Klemmkörperaufnahme (31) geführt werden kann.

10. Gurt (1) oder Gurtsegment (1) gemäß Anspruch 9, ferner mit
einer Abdeckung, welche die Nut (30) und/oder die Klemmkörperaufnahme (31) senkrecht zur Längsrichtung (X) verschließen kann.

11. Gurt (1) oder Gurtsegment (1) gemäß einem der Ansprüche 9 oder 10,
wobei die Festigkeitsträgerdurchführung (30) in Längsrichtung (X) in entgegengesetzter Richtung zu den Enden (14) der Festigkeitsträger (13) aufgeweitet ausgebildet ist.

12. Gurt (1) oder Gurtsegment (1) gemäß einem der vorherigen Ansprüche,
wobei der Gurt (1) bzw. das Gurtsegment (1) einen elastomeren Grundkörper (10) aufweist, in dem die Festigkeitsträger (13) eingebettet sind,
wobei die Enden (14) der Festigkeitsträger (13) von dem Material des elastomeren Grundkörpers (10) freigelegt sind.

13. Gurt (1) oder Gurtsegment (1) gemäß einem der vorherigen Ansprüche,
wobei das Verbindungselement (2) an seiner gurtinneren Seite (26) eine halbkreisförmige Einbuchtung (27) aufweist.

## Claims

1. Belt (1) or belt segment (1), having
a plurality of strength supports (13) which run in the longitudinal direction (X) and are disposed so as to be mutually parallel, and
a connection element (2) which forms one end (15) of the belt (1) or of the belt segment (1), respectively, and is configured for connecting to a further connection element (2) of the other end (15) of the belt (1) or to one end (15) of a further belt segment (1), respectively,
wherein the ends (14) of the strength supports (13) are connected in a force-fitting manner to at least one clamping body (32) by press-fitting, and
wherein the clamping body (32) can be held in a form-fitting manner by the connection element (2) at least in the longitudinal direction (X),
**characterized in that**
a part-region (36) of the connection element (2) is configured as a tool region (36), in order to serve as a tool part during press-fitting of the ends (14) of the strength supports (13) in the clamping body (32),
wherein the ends (14) of the strength supports (13) have been connected to the clamping body (32) in the connection element (2) in a force-fitting manner by press-fitting.

2. Belt (1) or belt segment (1) according to Claim 1, wherein the tool region (36) has a contour (37) in a direction (Z) toward the ends (14) of the strength supports (13), which contour (37) can interact with the contour (43) of a pressing tool (42) in such a way that press-fitting of the ends (14) of the strength supports (13) in the connection element (2) can be achieved.

3. Belt (1) or belt segment (1) according to Claim 1 or 2, wherein the clamping body (32) can be supported during press-fitting from the one side in a direction (Z) by way of the tool region (36) of the connection element (2) and be press-fitted in the direction (Z) of a pressing tool (42) from the opposite side.

4. Belt (1) or belt segment (1) according to one of the preceding claims, wherein the material of the clamping body (32) is softer in relation to the material of the connection element (2).

5. Belt (1) or belt segment (1) according to one of the preceding claims,
wherein at least two ends (14) of the strength supports (13) are connected in a force-fitting manner to a common clamping body (32) or in each case individually to one clamping body (32).

6. Belt (1) or belt segment (1) according to one of the preceding claims,
wherein the connection element (2) has at least one clamping body receptacle (31) which is configured at least in sections as a tool region (), wherein at least one end (14) of a strength support (13) which is provided with a clamping body (32) can be received in the clamping body receptacle (31) and be held in a form-fitting manner at least in the longitudinal direction (X).

7. Belt (1) or belt segment (1) according to Claim 6, wherein the clamping body receptacle (31) is configured for receiving a clamping body (32), to which the ends (14) of a plurality of strength supports (13) or to which the end (14) of a strength support (13) are or is connected in a force-fitting manner.

8. Belt (1) or belt segment (1) according to one of Claims 6 or 7, wherein the connection element (2) has at least two clamping body receptacles (31), in which in each case at least one end (14) of a strength support (13) which is provided with a clamping body (32) can be received and can be held in a form-fitting manner at least in the longitudinal direction (X),
wherein the two clamping body receptacles (31) are separated from one another in the transverse direction (Y) by way of a web (33) which runs in the longitudinal direction (X).

9. Belt (1) or belt segment (1) according to one of Claims 6 to 8, wherein the connection element (2) has at least one strength support leadthrough (30), preferably in the form of a bore (30) and/or in the form of a groove (30), through which at least one strength support (13) can be passed in the longitudinal direction (X) into a clamping body receptacle (31).

10. Belt (1) or belt segment (1) according to Claim 9, furthermore having a cover which can close the groove (30) and/or the clamping body receptacle (31) perpendicularly to the longitudinal direction (X).

11. Belt (1) or belt segment (1) according to one of Claims 9 or 10, wherein the strength support leadthrough (30) is of a widened configuration in the longitudinal direction (X), in the direction that is opposite to the ends (14) of the strength supports (13).

12. Belt (1) or belt segment (1) according to one of the preceding claims,
wherein the belt (1) or the belt segment (1), respectively, has an elastomeric main body (10) in which the strength supports (13) are embedded,
wherein the ends (14) of the strength supports (13) are exposed by the material of the elastomeric main body (10).

13. Belt (1) or belt segment (1) according to one of the preceding claims,
wherein the connection element (2) on the belt inner side (26) thereof has a semicircular concavity (27).

## Revendications

1. Courroie (1) ou segment de courroie (1), comprenant
une pluralité de supports de renforcement (13) s'étendant dans la direction longitudinale (X) et disposés en parallèle les uns aux autres, et
un élément de liaison (2) qui constitue une extrémité (15) de la courroie (1) ou du segment de courroie (1) et est réalisé pour être relié à un autre élément de liaison (2) de l'autre extrémité (15) de la courroie (1) ou à une extrémité (15) d'un autre segment de courroie (1),
dans laquelle/lequel les extrémités (14) des supports de renforcement (13) sont reliées par adhérence à au moins un corps de serrage (32) par compression, et
dans laquelle/lequel le corps de serrage (32) peut être retenu par complémentarité de forme par l'élément de liaison (2) au moins dans la direction longitudinale (X),
caractérisé(e) en ce qu'une zone partielle (36) de l'élément de liaison (2) est réalisée comme une zone d'outil (36) afin de servir de partie d'outil lors de la compression des extrémités (14) des supports de renforcement (13) dans le corps de serrage (32) comme une partie d'outil,
dans laquelle les extrémités (14) des supports de renforcement (13) ont été reliées par adhérence au corps de serrage (32) dans l'élément de liaison (2) par compression.

2. Courroie (1) ou segment de courroie (1) selon la revendication 1, dans laquelle/lequel la zone d'outil (36) présente dans une direction (Z) vers les extrémités (14) des supports de renforcement (13) un contour qui peut coopérer avec le contour (43) d'un outil de compression (42) de telle sorte qu'une compression des extrémités (14) des supports de renforcement (13) peut être obtenue dans l'élément de liaison (2).

3. Courroie (1) ou segment de courroie (1) selon la revendication 1 ou 2, dans laquelle/lequel lors de la compression, le corps de serrage (32) peut-être soutenu à partir d'un côté dans une direction (Z) par la zone d'outil (36) de l'élément de liaison (2) et peut être comprimé à partir du côté opposé dans la direction (Z) d'un outil de compression (42).

4. Courroie (1) ou segment de courroie (1) selon l'une quelconque des revendications précédentes, dans laquelle/lequel le matériau du corps de serrage (32) est plus souple par rapport au matériau de l'élément de liaison (2).

5. Courroie (1) ou segment de courroie (1) selon l'une quelconque des revendications précédentes, dans laquelle/lequel au moins deux extrémités (14) des supports de renforcement (13) sont reliées par adhérence à un corps de serrage commun (42) ou respectivement individuellement à un corps de serrage (32).

6. Courroie (1) ou segment de courroie (1) selon l'une quelconque des revendications précédentes, dans laquelle/lequel l'élément de liaison (2) présente au moins un logement de corps de serrage (31) qui est réalisé au moins par endroits comme une zone d'outil (36), dans laquelle/lequel au moins une extrémité (14), munie d'un corps de serrage (32), d'un support de renforcement (13) est reçue dans le logement de corps de serrage (31) et peut être retenue par complémentarité de forme au moins dans la direction longitudinale (X).

7. Courroie (1) ou segment de courroie (1) selon la revendication 6, dans laquelle/lequel le logement de corps de serrage (31) est réalisé pour recevoir un corps de serrage (32) auquel les extrémités (14) de plusieurs supports de renforcement (13) sont reliées ou auquel l'extrémité (14) d'un support de renforcement (13) est reliée par adhérence.

8. Courroie (1) ou segment de courroie (1) selon l'une quelconque des revendications 6 ou 7,
dans laquelle/lequel l'élément de liaison (2) présente au moins deux logements de corps de serrage (31) dans lesquels respectivement au moins une extrémité (14), munie d'un corps de serrage (32), d'un support de renforcement (13) est reçue et peut être retenue par complémentarité de forme au moins dans la direction longitudinale (X),
dans laquelle/lequel les deux logements de corps de serrage (31) sont séparés l'un de l'autre dans la direction transversale (Y) par une entretoise (33) s'étendant dans la direction longitudinale (X).

9. Courroie (1) ou segment de courroie (1) selon l'une quelconque des revendications 6 à 8, dans laquelle/lequel l'élément de liaison (2) présente au moins un passage de support de renforcement (30), de préférence sous la forme d'un alésage (30) et/ou sous la forme d'une rainure (30), à travers lequel/laquelle ledit au moins un support de renforcement (13) peut être guidé dans la direction longitudinale (X) dans un logement de corps de serrage (31).

10. Courroie (1) ou segment de courroie (1) selon la revendication 9, comprenant en outre un recouvrement qui peut fermer la rainure (30) et/ou le logement de corps de serrage (31) perpendiculairement à la direction longitudinale (X).

11. Courroie (1) ou segment de courroie (1) selon l'une quelconque des revendications 9 ou 10, dans laquelle/lequel le passage de support de renforcement (30) est réalisé de manière élargie dans la direction longitudinale (X), dans la direction opposée aux extrémités (14) des supports de renforcement.

12. Courroie (1) ou segment de courroie (1) selon l'une quelconque des revendications précédentes,
dans laquelle/lequel la courroie (1) ou le segment de courroie (1) présente un corps de base élastomère (10) dans lequel les supports de renforcement (13) sont incorporés,
dans laquelle/lequel les extrémités (14) des supports de renforcement (13) sont exposées par le matériau du corps de base élastomère (10).

13. Courroie (1) ou segment de courroie (1) selon l'une quelconque des revendications précédentes, dans laquelle/lequel l'élément de liaison (2) présente sur son côté intérieur de la courroie (26) un creux semi-circulaire (27).
